# EUROPÄISCHE PATENTSCHRIFT

(11) **EP 0 923 752 B1**
(45) Veröffentlichungstag und Bekanntmachung des Hinweises auf die Patenterteilung: **24.07.2002**
(21) Anmeldenummer: 97943736.5
(22) Anmeldetag: 03.09.1997
(51) Int. Cl.: G02B 21/36

(54) **KOMPAKTES VIDEO-MIKROSKOP**
COMPACT VIDEO MICROSCOPE
MICROSCOPE VIDEO COMPACT

(30) Priorität: 03.09.1996 DE 19635666
(43) Veröffentlichungstag der Anmeldung: 23.06.1999
(73) Patentinhaber: Leica Microsystems Wetzlar GmbH, 35530 Wetzlar (DE)
(72) Erfinder: KAPITZA, Hans-Georg, D-73447 Oberkochen (DE)
(74) Vertreter: Stamer, Harald
(86) Internationale Anmeldenummer: DE9701932
(87) Internationale Veröffentlichungsnummer: WO9810320

(56) Entgegenhaltungen:
- EP-A- 0 164 680
- EP-A- 0 539 609
- WO-A-96/20421
- DE-A- 3 623 394
- GB-A- 2 299 236
- US-A- 4 845 552
- B. JAGGI ET AL.: "DESIGN OF A SOLID-STATE MICROSCOPE" OPTICAL ENGINEERING., Bd. 28, Nr. 6, Juni 1989, BELLINGHAM US, Seiten 675-682, XP000026297

## Beschreibung

Die Erfindung betrifft ein kompaktes Video-Mikroskop nach dem Oberbegriff des Anspruchs 1, wie es in der EP 380 904 A1 beschrieben ist, bzw. nach dem Oberbegriff des Anspruchs 2.

Aus der US 4 206 966 ist ein Mikroskop bekannt, bei dem das Objektbild zur visuellen Darstellung auf die Rückseite einer im oberen Gehäuseteil des Mikroskops untergebrachten und als Bildschirm dienenden Mattscheibe projiziert wird. Aus der US 5 031 099 ist darüber hinaus ein computerunterstütztes Videomikroskop bekannt, das aus einem Mikroskop mit einem konventionellen Mikroskopstativ, einem dazu separat angeordneten Computer und den zum Computer zugehörigen Peripheriegeräten wie Monitor, Drucker, Tastatur usw. besteht. Der Computer umfaßt dabei diverse Steckkarten, die sowohl die Kommunikation mit den Peripheriegeräten als auch die Ansteuerung unterschiedlicher motorischer Funktionen des Mikroskops - wie den motorischen Fokussiertrieb und den motorischen Kreuztisch - ermöglichen.

Nachteilig an solchen nicht-integrierten Lösungen ist der erhebliche Platzbedarf, weil die einzelnen Komponenten - wie Monitor, Computer und sonstige Peripheriegeräte - nebeneinander auf einer Arbeitsfläche angeordnet werden. Auch reduzieren die vielen benötigten Verbindungskabel die Zuverlässigkeit des Gesamtaufbaus und stellen hochauflösender Bilder ist bisher an Monitore mit Bildröhren gebunden, die eine große Bildschirmdiagonale aufweisen, weil im Gegensatz zu Flachbildschirmen die einzelnen Bildelemente bei Bildröhren relativ groß sind. Damit einher geht nicht nur ein hoher Platzbedarf, sondern auch ein hohes Gewicht des Monitors, was einen Einsatz des Gesamtsystems an wechselnden Orten erschwert. Ebenfalls hinderlich für einen solchen Einsatz an wechselnden Orten ist die Notwendigkeit, beim Abbau Kabelverbindungen zu trennen und sie beim Aufbau wiederherstellen zu müssen.

Die in der WO 96/20421 A1 beschriebene Vorrichtung dient dazu, ein aktuelles mikroskopisches Bild gemeinsam mit einer durch eine zweite Vorrichtung gewonnenen, bildhaften Darstellung eines räumlichen Objekts zu beobachten. Die bekannte Anordnung ist dadurch gekennzeichnet, daß sie eine "adaptive Regelvorrichtung" beinhaltet, welche durch automatisches Anpassen der beiden bildhaften Darstellungen dem Beobachter stets ein geometrisch konsistentes Überlagerungsbild bietet. Entscheidend ist hierbei, daß diese "adaptive Regelvorrichtung" dem Benutzer durch Algorithmen, Positionsmeßeinrichtungen und Stellmotoren die Arbeit der räumlich-geometrisch korrekten Einstellung der mikroskopischen und der anderweitig erzeugten Darstellung abnimmt. Zur Darstellung werden separate Monitore verwendet; alternativ kleine Displays, die über die Okulare des verwendeten Mikroskops beobachtet werden.

Das erfindungsgemäße Video-Mikroskop bzw. der Videotubus hingegen ermöglicht die visuell-manuelle Herstellung einer Überlagerung von aktuellem mikroskopischen Bild und einem gespeicherten - vorzugsweise mikroskopischen - Bild in scheinbar einer Ebene direkt auf dem integrierten Flachbildschirm.

In der DE 196 09 288 A1 ist ein Video-Mikroskop beschrieben, das in Form einer miniaturisierten Baugruppe in einen handelsüblichen Computer eingebaut wird und typischerweise in einem Laufwerksschacht dieses Computers Platz findet oder als externe Einheit in einem handelsüblichen Peripheriegehäuse für Computer betrieben wird. Mit seiner automatisierten Zuführung von Standardobjektträgem ist dieses miniaturisierte Mikroskop vor allem für Aufgaben in der medizinischen Laborroutine geeignet. Er stellt gewissermaßen ein Gegenstück zur vorliegenden Anmeldung dar, weil bei der DE 196 09 288 A1 das Mikroskop in einen vorhandenen Computer eingebaut wird, während der erfindungsgemäße Videotubus entweder den Computer enthält oder mit einem separaten Computer betrieben wird.

Das in der EP 380 904 A1 beschriebene quantitative Lichtmikroskop zielt auf die Schaffung eines sehr hoch auflösenden Lichtmikroskops für die quantitative Bilderfassung mit großen Sensorflächen und Objektiven hoher Apertur für die Erzeugung sehr großer ("ultra-wide") Sehfelder. Zentrales Anliegen dieser optischen Anordnung ist die direkte Abbildung des Objektes auf einen Bildsensor unter Weglassung jeglicher weiteren abbildenden optischen Elemente zwischen Objektiv und Bildsensor. Eine hohe Bildauflösung soll sowohl durch ein großes Bildfeld bei gleichzeitig hoher numerischer Apertur des Objektivs, als auch durch einen großflächigen, mit vielen Bildelementen versehenen Bildsensor erreicht werden. Dadurch soll es möglich werden, mit einem einzigen Bild eine gute Übersicht zu erhaften und auch an jeder beliebigen Stelle durch Betrachten eines nachträglich festgelegten Ausschnittes Details zu studieren. Dieser bekannte Lösungsvorschlag würde die Schaffung und Bereitstellung solcher spezieller Objektive erfordern. Die in der Beschreibung zitierten handelsüblichen Objektive alleine leisten nicht diese Form der Abbildung, da sie entweder zusätzlicher kompensierender Optiken, oder aber einer Tubuslinse bedürfen, um den Ansprüchen an eine ausreichende optische Korrektur zu genügen beziehungsweise um überhaupt ein reelles optisches Zwischenbild zu erzeugen. Genau diese Zusatzoptiken aber will die Erfindung ausschließen. Weiterhin wird ausdrücklich die Benutzung eines Videosignals für die Übertragung von Bilddaten zwischen Bildsensor und Rechner ausgeschlossen. Ferner werden Aspekte einer Integration aller Komponenten in ein einziges Gehäuse und die ausschließliche Beobachtung über einen Bildschirm weder angesprochen, noch ausgeführt.

Ein prinzipieller Nachteil bekannter Lösungsvorschläge ist darin zu sehen, daß mikroskopische Bilder für elektronische Bildsensoren - wie CCD-Kameras - durch eine Abbildungsoptik erzeugt werden, die mit dem gleichen Tubus und der zugehörigen Tubuslinse in Zusammenhang steht, die auch das Zwischenbild für die Okulare erzeugt. Bei der Verwendung der heute allgemein üblichen Objektive für Lichtmikroskope liegt die Optik für den oder die Bildsensoren stets hinter einer Tubuslinse. Weil aber die Diagonalen der aktiven Aufnahmeflächen von Bildsensoren viel kleiner sind als die für die Okulare benötigten relativ großen Zwischenbilder, wird bei den heute üblichen Konstruktionen das durch die Tubuslinse vergrößerte Bild nachträglich für die Abbildung auf die Bildsensoren wieder verkleinert. Dies widerspricht dem Grundbedürfnis, ein lichtmikroskopisches Bild mit möglichst wenigen Linsen zu erzeugen, um störende Einflüsse - wie Reflexe und Lichtabsorption der Optikbauteile - gering zu halten.

Der vorliegenden Erfindung liegt daher die Aufgabe zugrunde, ein Video-Mikroskop bzw. einen Videotubus für Mikroskop-Stative für alle in der Lichtmikroskopie üblichen Kontrastierungsmethoden und Präparattypen zu schaffen, das bzw. der einen kompakten Aufbau, eine komfortablere Art der Betrachtung des Bildes und der mit ihm verknüpften Daten, sowie eine Bedienung ermöglicht, die weitestgehend von einer geeigneten Software unterstützt wird.

Diese Aufgabe wird durch ein Video-Mikroskop mit den Merkmalen des Anspruches 1 bzw. durch ein Video-Mikroskop mit den Merkmalen des Anspruchs 2 gelöst. Vorteilhafte Weiterbildungen dieser Mikroskope sind Gegenstand der Unteransprüche.

Für ein solches Mikroskop bzw. für einen derartigen Videotubus werden das Gewicht und der Platzbedarf des Gesamtsystems nachhaltig reduziert. Schließlich wird auf die rein lichtoptische Betrachtung des Bildes mit Hilfe von Tubus und Okular(en) verzichtet. Statt dessen wird die Orientierung im Präparat durch die optische Darstellung eines Übersichtsbildes auf der Rückseite eines Flachbildschirms ermöglicht. Die Erfassung, Darstellung und Dokumentation von mikroskopischen Bildern wird auf rein elektronischem Wege ohne die Zuhilfenahme von Filmmaterial oder anderen Bildträgern chemischer Natur ermöglicht. Dadurch, daß Komponenten wie Mikrofon, Lautsprecher und Miniaturvideokameras in das Lichtmikroskop eingebaut werden können, die ihrerseits über entsprechende elektronische Signalwandler mit dem eingebauten Computer verknüpft sind, ergeben sich weitere Möglichkeiten durch eine Sprachsteuerung des Lichtmikroskops, die Aufzeichnung bildbegleitender Sprachdaten und die Telekommunikation einschließlich einer Videokonferenz direkt am Lichtmikroskop.

Das erfindungsgemäße Video-Mikroskop bzw. der erfindungsgemäße Videotubus weist ein geschlossenes Gehäuse auf, innerhalb dessen und an dessen Außenflächen sämtliche optischen und elektronischen Komponenten für die elektronische Aufnahme und Darstellung von mikroskopischen Bildern eines Lichtmikroskops angeordnet sind. Für die Aufzeichnung der mikroskopischen Bilder enthält das gleiche Gehäuse elektronische Bildsensoren, wie zum Beispiel einen oder mehrere flächige oder zeilenförmige CCD-Sensoren mit einer hinreichend großen Zahl von Aufnahmeelementen und die damit verknüpften elektronischen Komponenten, die zur Verstärkung, Beeinflussung und Digitalisierung der elektrischen Ströme dienen, die aus den Bildsensoren stammen und die Bildinformation tragen. Daneben enthält dasselbe Gehäuse einen Computer und einen Flachbildschirm zur Darstellung der mikroskopischen Bilder und Daten nebst Bedienoberflächen, die durch Software im Computer erzeugt werden. Zusätzlich können Komponenten wie Mikrofon, Lautsprecher und Miniaturvideokamera im gleichen Gehäuse eingebaut werden.

Bei einem alternativen Ausführungsbeispiel ist das Video-Mikroskop bzw. der Videotubus für die direkte lichtoptische Projektion von Bildern auf die Rückseite des Flachbildschirms oder eine geeignete Projektionsfläche in einer Ebene ausgerüstet, die in oder unmittelbar hinter der Darstellungsebene des Flachbildschirms liegt, so daß für den Betrachter das projizierte lichtoptische Bild innerhalb der Fläche des Flachbildschirms sichtbar wird. Dort kann es bei Verwendung des eingebauten oder auch eines anderen, entfernten Computers zusammen mit Zeichen, Grafiken und anderen bereits auf elektronischem Wege erzeugten Bildern ohne die Zuhilfenahme von Okularen oder ähnlichen Optiken auf direktem Wege betrachtet werden. Diese Einrichtung kann jederzeit schnell eingeschaltet werden, um das Absuchen von Präparaten zu erleichtern.

Bei beiden Varianten des erfindungsgemäßen Mikroskops bzw. des Videotubus sind optische Ein- und Ausgänge vorhanden. Über diese können klassische externe Komponenten für lichtmikroskopische Verfahren - wie Mitbeobachtungseinrichtungen samt normalen Tuben und Okularen, Fotokameras, Videokameras, Bildeinspiegelungsgeräte, Zeichenapparate und andere bekannte Zubehöre - angeschlossen werden. Auch für die Verwendung von Modulen für die konfokale Mikroskopie und Laserstrahleinrichtungen sind diese Ein- und Ausgänge in der bekannten Weise zu verwenden.

Nahezu alle neueren Lichtmikroskope verwenden die sogenannte Unendlich-Optik, bei der zunächst das Objektiv die Strahlen, die von Objekten aus der vorderen Fokusebene stammen, hinter dem Objektiv mit Schnittpunkten in unendlicher Entfernung vereinigt. Eine Tubuslinse geeigneter Brennweite erzeugt das erste Zwischenbild in einem endlichen Abstand, wobei 160 bis 250 mm gebräuchlich sind. Hinter dieser Tubuslinse, deren Schnittweite auf die Erzeugung eines für die Benutzung von Okularen brauchbaren, relativ großen Zwischenbildes berechnet wird, kommen weitere Linsen für die Adaption von Bildsensoren zum Einsatz. Da gebräuchliche Bildsensoren viel kleinere Diagonalen ihrer aktiven Fläche aufweisen - typisch sind heute 4 bis 12 mm - als die in den Okularen üblichen Durchmesser der Zwischenbilder (18 bis 28 mm), werden durch teilweise aufwendige Adapteroptiken die zuerst vergrößerten Bilder nachträglich zwecks Sehfeldanpassung an die Bildsensoren deutlich verkleinert.

Im erfindungsgemäßen Video-Mikroskop bzw. Videotubus wird diese Situation grundsätzlich dadurch vermieden, daß keine Okulare für die Bildbetrachtung eingesetzt werden. Die Bildbetrachtung erfolgt über den eingebauten Flachbildschirm mit dem unbewaffneten Auge. Damit entfällt auch die Notwendigkeit, eine Tubuslinse langer Schnittweite einzusetzen, wie sie durch den Gebrauch von Okularen erzwungen wird. Statt dessen wird für die Bildsensoren eine im Gegensatz zur eben beschriebenen Praxis vereinfachte Bilderzeugung gewählt: Die vom Objektiv des Video-Mikroskops erzeugten quasi-parallelen Lichtstrahlen werden ohne Verwendung einer Tubuslinse direkt durch eine Zoom-Optik veränderlicher Brennweite aber fester Bildlage auf die aktive Fläche der Bildsensoren fokussiert. Die Verwendung solcher Zoom-Objektive vor den Bildsensoren erlaubt die bequeme Anpassung der im digitalen Bild wirksam werdenden Gesamtvergrößerung und damit auch der objektseitigen Sehfeldgröße an die Präparatsituation. Die Veränderung der Brennweite kann über den eingebauten Computer und eine mit dem Zoom-Objektiv verbundene Motorsteuerung unterstützt werden. Über geeignete Encoder wird auf bekannte Weise der jeweils aktuelle Wert dieses zusätzlichen Abbildungsmaßstabs vom Computer erfaßt, angezeigt und bei der digitalen Bildauswertung berücksichtigt.

Daneben kann über diese Optik, die ein- oder mehrfach motorisiert und mit vom Computer angesteuert wird, auch eine Korrektur der Bildlage in Abhängigkeit von der Wellenlänge des verwendeten Lichtes oder der Fokusablage des verwendeten Mikroskopobjektivs vorgenommen werden.

Nachfolgend werden Einzelheiten der Erfindung anhand der in den Figuren dargestellten Ausführungsbeispiele näher erläutert.

### Dabei zeigen:

- Figur 1a: eine Vorderansicht eines erfindungsgemäßen kompakten Video-Mikroskops;
- Figur 1b: eine entsprechende Seitenansicht;
- Figur 2: einen senkrechten Schnitt durch die Mittelebene des erfindungsgemäßen Mikroskops, in der die wichtigsten optischen Achsen verlaufen;
- Figur 3: einen senkrechten Schnitt durch das Mikroskop wie in Figur 2 mit der Darstellung der alternativen Ausführung, bei der die lichtoptische Projektionsdarstellung eingeschaltet ist;
- Figur 4a: eine Vorderansicht einer Kombination eines Mikroskop-Stativs und dem erfindungsgemäßen Videotubus;
- Figur 4b: einen senkrechten Schnitt durch die Mittelebene des Videotubus im Zusammenhang mit dem Mikroskop-Stativ gemäß Fig. 4a;
- Figur 5: einen senkrechten Schnitt durch den Videotubus und das Mikroskop-Stativ, wobei zwischen beiden Baueinheiten zur besseren Darstellung des Modul-Charakters des Videotubus ein Zwischenabstand belassen wurde;
- Figur 6: einen senkrechten Schnitt durch eine weitere Ausführungsform, wobei die lichtoptische Projektionsdarstellung eingeschaltet ist.

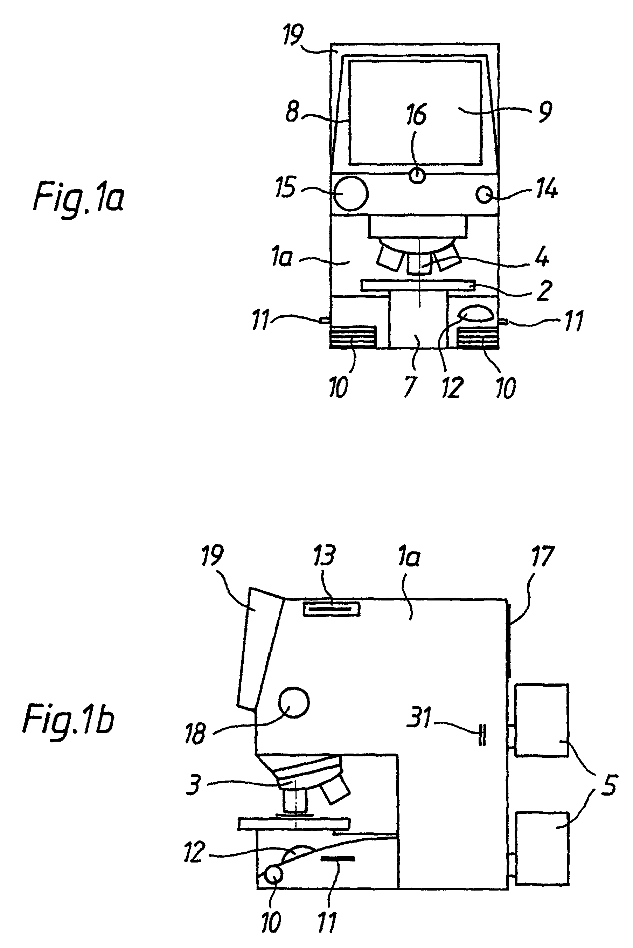

In den Figuren 1a und 1b ist die Vorder- bzw. Seitenansicht des integrierten Mikroskops dargestellt. Das Gehäuse (1a) beinhaltet in seinem unteren Teil alle Komponenten, die ein universelles Lichtmikroskop für Durch- und Auflichtmethoden üblicherweise aufweist. Stellvertretend seien zur besseren Orientierung hier die Komponenten Mikroskoptisch (2), Objektivrevolver (3), Objektive (4) und Lichtquellen (5) genannt. Leuchten geringer Leistung können auch innerhalb des Gehäuses (1a) betrieben werden. Je nach dem Grad der Motorisierung werden auch Mikroskopkomponenten von Hand bedient, wie das im Beispiel mit den Filterschiebern (31) für Auflicht der Fall ist, oder motorisch verstellt, wie beim Kondensor für Durchlicht, der im Gehäusefuß (7) verborgen ist. Grundsätzlich wird man aber versuchen, möglichst viele Komponenten mit Encodem und Motoren zu versehen, um sie unter der Kontrolle von Software vom eingebauten Computer zu steuern. Aber es können auch beliebige Komponenten von Hand zu bedienen sein, wobei dann Encoder für die Rückmeldung an den Computer von Vorteil sind. Im oberen Teil des Gehäuses (1a) ist ein dem Beobachter zugewandter Flachbildschirm (8) eingebaut, der mit einer geeigneten Projektionsfläche (9) hinterlegt ist, die nicht nur die homogene Ausleuchtung des Flachbildschirms (8) im Normalbetrieb unterstützt, sondern auch als Projektionsschirm (9) für optische Abbildungen durch das Lichtmikroskop dient. Im unteren Teil des Gehäuses (1a) sind im Zugriffsbereich der Hände einer Person Bedienelemente für die Grob- und Feinfokussierung (10) des mikroskopischen Bildes durch Verschieben von Objektiv (4) oder Tisch (2), Helligkeit der Lichtquellen (5) oder Einstellung des Zoom-Faktors (11) und ein Eingabegerät für einen Bildschirmzeiger ("Cursor") (12), der die Interaktion mit der Computersoftware ermöglicht und für die Koordinatenverstellung eines motorischen Mikroskoptisches benutzt wird. Für den Datenaustausch mit dem Computer (25) sind ein oder mehrere Speichergeräte für auswechselbare Datenträger (13) - wie Disketten, magneto-optische Platten, Magnetbänder oder andere - eingebaut. Für die Erfassung von Sprachdaten, und zwar sowohl für die Erfassung von bildbegleitenden Kommentaren als auch für eine Sprachsteuerung des integrierten Mikroskops, ist an der Vorderseite ein Mikrofon (14) vorgesehen. Die Wiedergabe erfolgt unter anderem durch den eingebauten Lautsprecher (15). Bei Bedarf wird ferner eine miniaturisierte Videokamera (16) vorgesehen, die Videokonferenzen über größere Distanzen ermöglicht. Auf der Rückseite des Gerätes befindet sich das Anschlußfeld (17) des Computers, an dem in bekannter Weise die Stecker für Tastaturen, Drucker, Leitungen für die Datenfernübertragung und andere einschlägige Geräte angeschlossen werden. An einer oder beiden Seitenfläche(n) des Gehäuses (1a) können verschließbare Anschlüsse (18) für externe optische Komponenten - wie Einrichtungen für die Mitbeobachtung oder Einspiegelung von Bildern oder Lichtstrahlen in den Strahiengang des Lichtmikroskops - vorgesehen werden. Bei ungünstigen Beleuchtungsverhältnissen am Aufstellungsort des Mikroskops wird Abhilfe durch einen Schutzschirm (19) geschaffen, der von oben einfallendes Umgebungslicht vom Flachbildschirm (8) und der damit verbundenen Projektionsfläche (9) femhält.

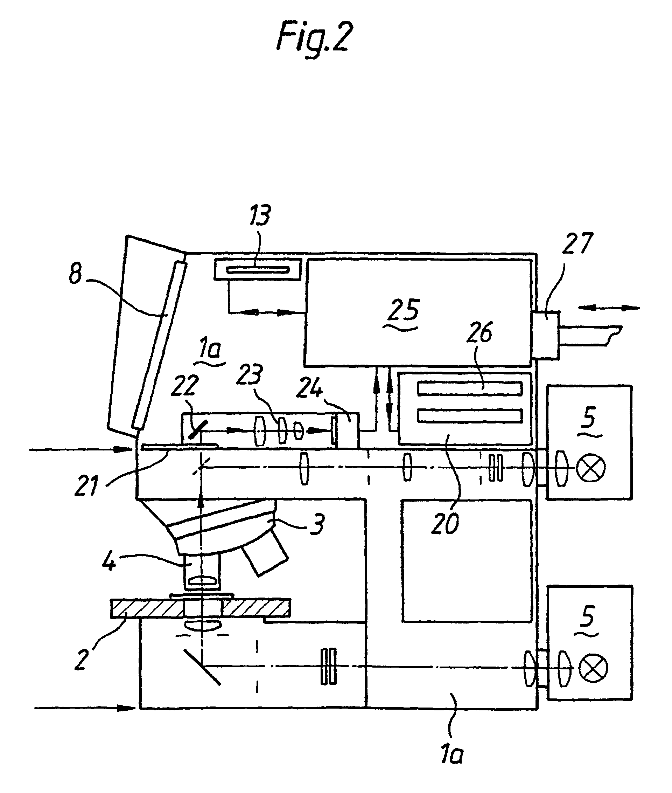

Der Strahlengang und die Elemente zur elektronischen Bilderzeugung sind in Figur 2 dargestellt. Die Komponenten, die zum Aufbau eines klassischen Lichtmikroskops mit Objektiven unendlicher Brennweite gehören, befinden sich zwischen den beiden Pfeilmarkierungen und bedürfen keiner weiteren Erläuterung. Der obere Pfeil markiert die Ebene, in der normalerweise ein Tubus mit Tubuslinse, Knickbrücke und Okularen aufgesetzt wird. Dabei kommen die Lichtstrahlen für die Erzeugung des mikroskopischen Bildes vom Objektiv (4) und passieren ein oder mehrere Lichtfilter (21), die vorzugsweise in motorisierten Filterrädern oder Schiebern angeordnet sind. Durch die Filter kann die Kontrastierung des Bildes, die Abschwächung des Lichtes und insbesondere die Erzeugung von Farbauszügen erreicht werden. Auch der Einsatz von abbildenden Linsen oder Linsensystemen für die Darstellung der Pupillenebene des Mikroskopobjektivs oder für die Übersichtsdarstellung des Präparats ist hier vorgesehen. Durch einen Umlenkspiegel (22) oder geeignetes Umlenkprisma wird das Licht der Zoom-Optik (23) zugeführt, die auf der aktiven Fläche eines elektronischen Bild- oder Zeilensensors (24) das mikroskopische Bild erzeugt. Hinter der Zoom-Optik (23) können mehrere Bildsensoren (24) wahlweise benutzt werden, indem entweder der Lichtstrahl durch einen beweglichen Spiegel oder Strahlteiler das Licht auf diese lenkt oder indem der oder die gerade benutzten Bildsensoren (24) mit ihrer aktiven Fläche in die Bildebene gebracht werden. Über die mit dem Bildsensor verbundene Elektronik wird das Bildsignal dem Computer (25) zugeführt, der von seinem eigenen Netzteil (20) versorgt wird. Von dort aus wird es auf dem Flachbildschirm (8) sichtbar gemacht und kann auf auswechselbaren Speichermedien (13) oder fest eingebauten Speichermedien (26) - wie zum Beispiel magnetischen Festpiatten - abgespeichert werden. Über das Anschlußfeld (17) des Computers (25) kann das Bild zusammen mit anderen Daten auch über Datenleitungen (27) zu anderen Geräten geschickt werden. Auch können selbstverständlich Bilder und Daten von anderen Geräten über solche Leitungen zur Darstellung auf dem Flachbildschirm und weiterer Verwendung empfangen werden.

Bei den Bildsensoren (24) kommen nebeneinander bis zu drei verschiedene Typen zum Einsatz: Hochauflösende Sensoren für die Bildaufzeichnung, vorzugsweise Schwarz-Weiß-CCD-Sensoren, die das mikroskopische Bild direkt oder nach spektraler Zerlegung mit den Filtern (21) nacheinander in Farbauszügen - zum Beispiel Rot, Grün und Blau - aufzeichnen. Diese Farbauszüge werden vom Computer (25) zu Farbbildern vereint und auf dem Flachbildschirm dargestellt. Ein weiterer Bildsensor stellt vorzugsweise ein farbiges Fernsehbild mit hoher Wiederholungsrate zum Durchmustern des Präparats zur Verfügung, das durch den Computer (25) nach einer der üblichen Videonormen erfaßt und ohne störende Verzögerung auf dem Flachbildschirm (8) dargestellt wird. Ein Zeilensensor schließlich ermöglicht die Erfassung von Übersichtsbildern, indem über ein Spezialobjektiv (4) oder eine Linse im Filterrad (21) oder beide gleichzeitig die Abbildung erfolgt. Zur Herstellung des Übersichtsbildes wird dann das Objekt manuell oder motorisch mit dem Mikroskoptisch (2) linear verfahren und vom Computer (25) aufgezeichnet. Hierzu besitzt der Mikroskoptisch (2) mindestens einen geeigneten Wegaufnehmer für die Übergabe der aktuellen Position an den Computer (25). Alle Sensoren werden durch geeignete Maßnahmen zur Abschirmung gegen elektromagnetische Einstrahlungen geschützt und können bei Bedarf gekühlt werden, um den nutzbaren Empfindlichkeitsbereich durch längere Integrationszeiten zu erweitem.

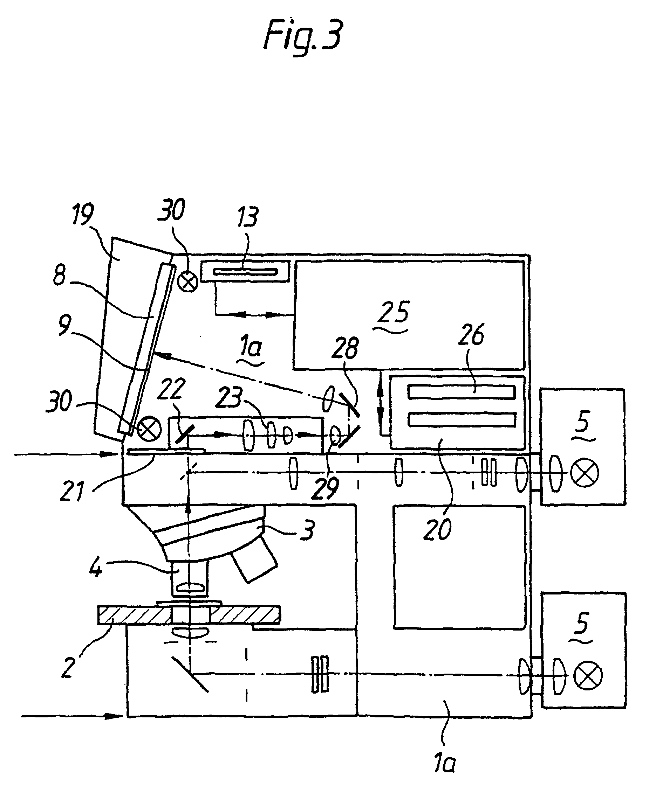

In Figur 3 wird die optische Darstellung des mikroskopischen Bildes auf einem Projektionsschirm (9) dargestellt, der unmittelbar hinter dem Flachbildschirm (8) angeordnet ist. Hierzu wird das Licht hinter der Zoom-Optik (23) nicht auf den Bildsensor gelenkt, sondern über die Spiegelgruppe (28) und eine weitere Zwischenoptik (29) unter erheblicher Vergrößerung auf den Projektionsschirm (9) gelenkt und dort einer oder mehreren Personen sichtbar gemacht. Zusammen mit einer geeigneten Beleuchtung (30) des Flachbildschirms können auch diesem optisch erzeugten Bild alphanumerische Zeichen und Grafiken mittels geeigneter Software und mit Hilfe des Computers (25) zur Betrachtung und Interaktion überlagert werden.

Schließlich können zu Zwecken des Vergleichs und als Hilfe zur Ausrichtung von Objekten gespeicherte, digitale und aktuelle optische Bilder zur Betrachtung überlagert werden. Insbesondere für Auflichtpräparate in Form von Anschliffen ergeben sich so neue Möglichkeiten Präparatstellen gezielt wiederzufinden, deren relative Positionen einmal abgespeichert wurden. Hierzu wird ein gespeichertes Bild des Präparats durch Stauchen, Dehnen, Drehen und Verschieben seines früher gewonnenen digitalen Abbildes auf dem Flachbildschirm (8) mit dem überlagerten optischen Bild auf der Projektionsfläche (9) zur Deckung gebracht. Danach können früher im Computer (25) gespeicherte Koordinaten zum Wiederfinden bestimmter Stellen verwendet werden.

Alternativ kann diese Projektion auch ohne Benutzung der Zoom-Optik (23) erfolgen, indem das vom Objektiv (4) kommende Licht mittels Spiegeln (28) oder Prismen und einer Linsengruppe (29) langer Brennweite direkt auf die Projektionsfläche (9) abgebildet wird.

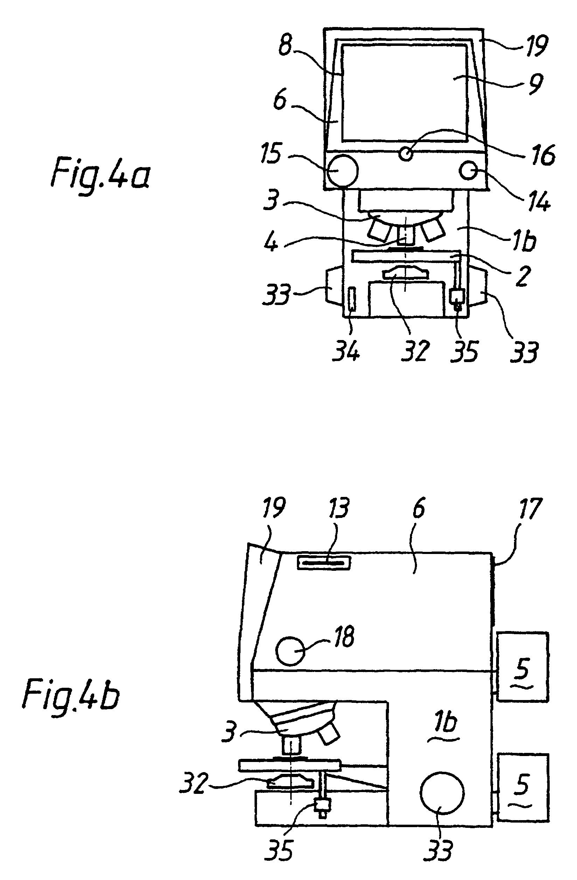

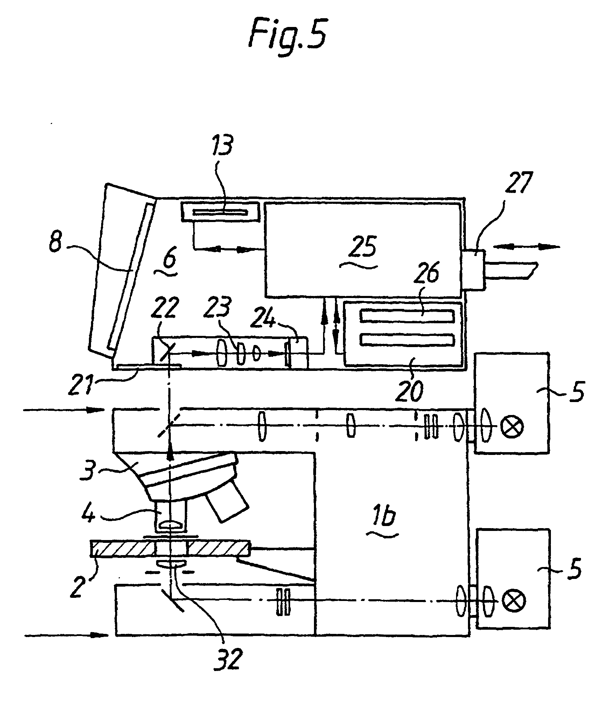

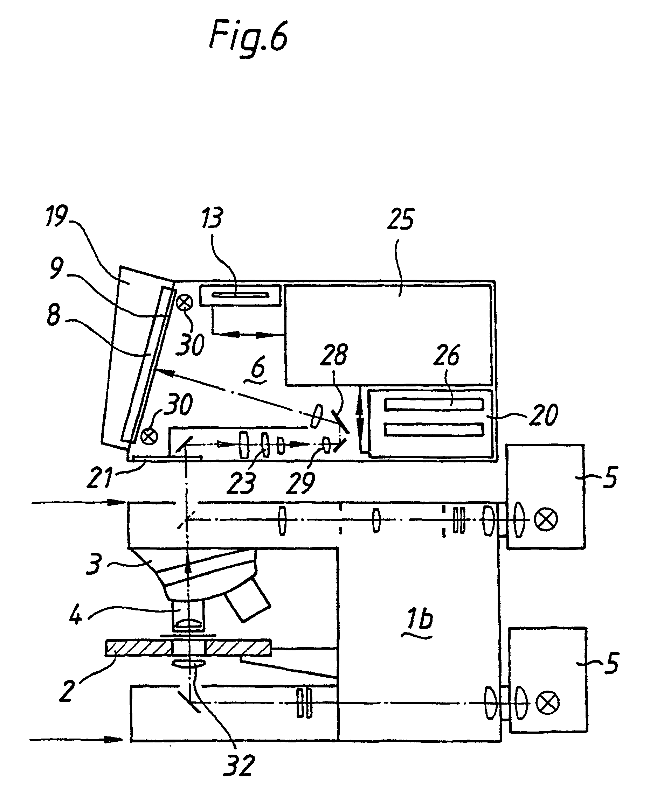

In den Fig. 4 bis 6 wird eine zweiteilige Variante des erfindungsgemäßen Video-Mikroskops - bestehend aus einem modular konzipierten Videotubus (6) und einem Mikroskop-Stativ (1b) - dargestellt. Analoge Bezugsziffern aus den Fig. 1 bis 3 gelten auch für diese Ausführungsform. Das Mikroskop-Stativ (1b) weist unter anderem einen Durchlichtkondensor (32), eine Fokussiereinrichtung (33), einen Regler (34) für die Lampenspannung und einen Koaxialtrieb (35) auf. Die Funktion dieses Videotubus (6) im Zusammenwirken mit dem Mikroskop-Stativ (1b) entspricht dem weiter oben bereits beschriebenen integrierten, kompakten Video-Mikroskop.

### Bezugsziffern-Liste

- 1 a: Mikroskop-Gehäuse
- 1b: Mikroskop-Stativ
- 2: Mikroskoptisch
- 3: Objektivrevolver
- 4: Objektiv(e)
- 5: Lichtquelle(n)
- 6: Videotubus
- 7: Gehäusefuß
- 8: Flachbildschirm
- 9: Projektionsfläche/Projektionsschirm
- 10: Grob- und Feinfokussierung
- 11: Einstellorgan für den Zoom-Faktor
- 12: Bildschirmzeiger ("Cursor")
- 13: (auswechselbare) Datenträger/Speichermedien
- 14: Mikrofon
- 15: Lautsprecher
- 16: Videokamera
- 17: Anschlußfeld
- 18: Anschlüsse
- 19: Schutzschirm
- 20: Netzteil
- 21: Lichtfilter/Filterrad
- 22: Umlenkspiegel
- 23: Zoom-Optik/-System
- 24: CCD-Bildsensor
- 25: Computer
- 26: Speichermedien (fest eingebaut)
- 27: Datenleitungen
- 28: Reflexions-Spiegel
- 29: Zwischenoptik
- 30: Beleuchtung
- 31: Filterschieber
- 32: Durchlichtkondensor
- 33: Fokussiereinrichtung
- 34: Regler für die Lampenspannung
- 35: Koaxialtrieb

## Patentansprüche

1. Kompaktes Video-Mikroskop mit einer Lichtquelle (5), einem Objektiv (4) und einem dem Objektiv (4) nachgeschalteten Zoom-System (23), welches das vom Objektiv (4) herkommende Objektlicht direkt auf einen CCD-Bildsensor (24) fokussiert und mit einem von dem Bildsensor (24) angesteuerten Computer (25), der das Bild des Objektes auf einem Bildschirm (8) ausgibt, wobei der Bildschirm (3) das einzige Ausgabemedium für eine visuelle Betrachtung des Objektes ist,
**dadurch gekennzeichnet, daß**
(a) das Mikroskop in einem einstückigen Gehäuse (1a) ausgebildet ist, das insbesondere den Computer (25) aufnimmt,
(b) der Bildschirm als transparenter Flachbildschirm (8) ausgebildet und beobachterseitig in das Gehäuse (1a) integriert ist,
(c) der CCD-Bildsensor (24) von einer Beaufschlagung mit Objektlicht ausschließbar ist und das Objektlicht im abgekoppelten Zustand des Bildsensors (24) auf mindestens ein(en) in den Strahlengang bringbaren/bringbares Reflexions-Spiegel (28) und/oder - Prisma fällt, welcher/welches das Objektlicht auf die beobachterabgewandte Seite des Bildschirms (8) projiziert und
(d) dem projizierten, aktuellen Objektbild mit Hilfe des Bildschirms (8) Grafiken, alphanumerische Zeichen und/oder abgespeicherte Objektbilder, die vor dem Projizieren des aktuellen Objektbildes von dem Bildsensor (24) registriert wurden, überlagerbar sind.

2. Kompaktes Video-Mikroskop, bestehend aus einem Stativ (1b) und einem Videotubus (6), wobei das Stativ (1b) mindestens eine ansetzbare Lichtquelle (5), einen Mikroskoptisch (2) und mindestens ein Objektiv (4) aufweist,
**dadurch gekennzeichnet, daß**
(a) der Videotubus (6) als Modul auf bzw. an dem okularfreien Stativ (1b) montierbar ist und
(b1) ein Umlenkspiegel (22) für das vom Objektiv (4) kommende Abbildungsstrahlenbündel, und
(b2) ein dem Umlenkspiegel (22) nachgeschaltetes Zoom-System (23), welches das Strahlenbündel direkt auf einen CCD-Bildsensor (24) fokussiert, vorgesehen sind sowie
(b3) ein von dem Bildsensor (24) angesteuerten Computer (25), der das Bild des Objektes auf einem Bildschirm ausgibt, wobei der Bildschirm das einzige Ausgabemedium für eine visuelle Betrachtung des Objektes und als transparenter Flachbildschirm (8) ausgebildet und beobachterseitig in den Videotubus (6) integriert ist,
enthält; daß
(c) der Bildsensor (24) von einer Beaufschlagung mit Objektlicht ausschließbar ist und das Objektlicht im abgekoppelten Zustand des Bildsensors (24) auf mindestens ein(en) in den Strahlengang bringbaren/bringbares Reflexions-Spiegel (28) und/oder -Prisma (29) fällt, welcher/welches das Objektlicht auf die beobachterabgewandte Seite des Bildschirms (8) projiziert, und daß
(d) dem projizierten, aktuellen Objektbild mit Hilfe des Bildschirms (8) Grafiken, alphanumerische Zeichen und/oder abgespeicherte Objektbilder, die vor dem Projizieren des aktuellen Objektbildes von dem Bildsensor (24) registriert wurden, überlagerbar sind.

3. Mikroskop nach Anspruch 1 oder 2, **dadurch gekennzeichnet, daß** die abgespeicherten Objektbilder auf Datenträgern (13, 26) vorliegen.

4. Mikroskop nach Anspruch 3, **dadurch gekennzeichnet, daß** die Datenträger (13) auswechselbar sind.

5. Mikroskop nach mindestens einem der Ansprüche 1 bis 4, **dadurch gekennzeichnet, daß** der Bildsensor (24) lediglich hell/dunkel registriert und farbige Objektbilder mit Hilfe von Lichtfiltern (21) und einer nachfolgenden additiven Farbmischung aus den drei Grundfarben durch den Computer (25) erzeugbar sind.

6. Mikroskop nach mindestens einem der Ansprüche 1 bis 5, bzw. 2-5, **dadurch gekennzeichnet, daß** an der Rückseite des Mikroskop-Gehäuses (1a) bzw. des Videotubus (6) ein Anschlußfeld (17) zur Telekommunikation angebracht ist.

7. Mikroskop nach mindestens einem der Ansprüche 1 bis 6, **dadurch gekennzeichnet, daß** das Mikroskop mit einem Mikrofon (14) zur Sprach-Steuerung und/oder - Aufzeichnung sowie mit einer Konferenzkamera (16) mit zugehörigem Lautsprecher (15) ausgestattet ist.

8. Mikroskop nach mindestens einem der Ansprüche 1 bis 7, **dadurch gekennzeichnet, daß** das Mikroskop optische Ein-und/oder Ausgänge (18) für klassische externe Optikkomponenten aufweist.

9. Mikroskop nach mindestens einem der Ansprüche 1 bis 8, **dadurch gekennzeichnet, daß** das Mikroskop als umgekehrtes Lichtmikroskop ausgebildet und der beobachterseitige Bildschirm (8) im unteren Teil des Gehäuses angeordnet ist.

## Claims

1. Compact video microscope having a light source (5), an objective (4) and a zoom system (23) which is connected downstream of the objective (4) and focuses the object light coming from the objective (4) directly onto a CCD image sensor (24), and having a computer (25) which is controlled by the image sensor (24) and outputs the image of the object onto a screen (8), the screen (3) being the sole output medium for visual observation of the object, **characterized in that**:
(a) the microscope is constructed in a unipartite housing (1a) which, in particular, holds the computer (25),
(b) the screen is constructed as a transparent flat screen (8) and integrated on the observer side into the upper part of the housing (1a),
(c) the CCD image sensor (24) can be excluded from being struck by object light and, in the decoupled state of the image sensor (24), the object light falls onto at least one reflecting mirror (28) and/or prism which can be brought into the beam path and projects the object light onto the side of the screen (8) averted from the observer, and
(d) with the aid of the screen (8) graphics, alphanumeric characters and/or stored object images which were recorded by the image sensor (24) before the projection of the current object image can be superimposed on the projected, current object image.

2. Compact video microscope comprising a stand (1b) and a video tube (6), the stand (1b) having at least one mountable light source (5), a microscope stage (2) and at least one objective (4), **characterized in that**:
(a) the video tube (6) can be mounted as a module on or at the ocular-free stand (1b), and
(b1) contains a deflecting mirror (22) for the imaging beam coming from the objective (4), and
(b2) a zoom system (23) which is connected downstream of the deflecting mirror (22) and focuses the beam directly onto a CCD image sensor (24), as well as
(b3) a computer (25) which is controlled by the image sensor (24) and outputs the image of the object on a screen, the screen being the sole output medium for visual observation of the object and being constructed as a transparent flat screen (8) and integrated in the video tube (6) on the observer side; **in that**
(c) the image sensor (24) can be excluded from being struck by object light and, in the decoupled state of the image sensor (24), the object light falls onto at least one reflecting mirror (28) and/or prism (29) which can be brought into the beam path and projects the object light onto the side of the screen (8) averted from the observer,and
(d) with the aid of the screen (8) graphics, alpha numeric characters and/or stored object images which were recorded by the image sensor (24) before the projection of the current object image can be superimposed on the projected, current object image.

3. Microscope according to Claim 1 or 2, **characterized in that** the stored object images are present on data carriers (13, 26).

4. Microscope according to Claim 3, **characterized in that** the data carriers (13) can be interchanged.

5. Microscope according to at least one of Claims 1 to 4, **characterized in that** the image sensor (24) records only in terms of light/dark, and coloured object images can be generated by the computer (25) from three primary colours with the aid of light filters (21) and a downstream additive mixing unit.

6. Microscope according to at least one of Claims 1 to 5,or 2 to 5, **characterized in that** a termination panel (17) is fitted on the rear side of the microscope housing (1a) or the video tube (6) for the purpose of telecommunication.

7. Microscope according to at least one of Claims 1 to 6, **characterized in that** the microscope is equipped with a microphone (14) for voice control and/or voice recording, and with a conference camera (16) with an associated loudspeaker (15).

8. Microscope according to at least one of Claims 1 to 7, **characterized in that** the microscope has optical inputs and/or outputs (18) for classical external optical components.

9. Microscope according to at least one of Claims 1 to 8, **characterized in that** the microscope is constructed as an inverted light microscope, and the observer-side screen (8) is arranged in the lower part of the housing.

## Revendications

1. Microscope vidéo compact comportant une source de lumière (5), un objectif (4) suivi d'un zoom (23) qui focalise directement la lumière de l'objet issue de l'objectif (4) sur un capteur d'image CCD (24) et un ordinateur (25) relié au capteur d'image (24) qui visualise l'image de l'objet sur un écran (8), l'écran (8) étant le seul moyen d'observation visuelle de l'objet,
**caractérisé en ce que**
(a) le microscope est intégré dans un boîtier monobloc (1a), qui abrite notamment l'ordinateur (25),
(b) l'écran se présente sous forme d'écran plat transparent (8) et est intégré du point de vue de l'observateur dans le boîtier (1a),
(c) le capteur d'image CCD (24) peut être exclu d'une soumission à la lumière de l'objet et, à l'état découplé du capteur d'image (24), la lumière de l'objet tombe sur au moins un miroir de réflexion et/ou prisme amenable sur le trajet des rayons et projetant l'image de l'objet sur la face de l'écran (8) opposée à l'observateur et
(d) des graphiques, caractères alphanumériques et/ou images d'objets mémorisées enregistrées par le capteur d'image (24) avant la projection de l'image de l'objet considéré sont superposables à l'image projetée de l'objet considéré à l'aide de l'écran (8).

2. Microscope vidéo compact, constitué d'un statif (1b) et d'un tube vidéo (6), le statif (1b) présentant au moins une source de lumière (5) rapportable, une platine (2) et au moins un objectif (4),
**caractérisé en ce que**
(a) le tube vidéo (6) est montable sous forme de module sur le statif (1b) dépourvu d'oculaire et
(b1) il est prévu un miroir de renvoi (22) du faisceau provenant de l'objectif (4) et,
(b2) en aval du miroir de renvoi (22), un zoom (23) qui focalise directement le faisceau sur un capteur d'image CCD (24), ainsi que
(b3) un ordinateur (25) relié au capteur d'image (24), qui visualise l'image de l'objet sur un écran, l'écran étant le seul moyen d'observation visuelle de l'objet et se présentant sous forme d'écran plat transparent (8) intégré du point de vue de l'observateur dans le tube vidéo (6)
(c) le capteur d'image CCD (24) peut être exclu d'une soumission à la lumière de l'objet et, à l'état découplé du capteur d'image (24), la lumière de l'objet tombe sur au moins un miroir de réflexion (28) et/ou prisme (29) amenable sur le trajet des rayons et projetant l'image de l'objet sur la face de l'écran (8) opposée à l'observateur et
(d) des graphiques, caractères alphanumériques et/ou images d'objets mémorisées enregistrées par le capteur d'image (24) avant la projection de l'image de l'objet considéré sont superposables à l'image projetée de l'objet considéré à l'aide de l'écran (8).

3. Microscope suivant la revendication 1 ou 2, **caractérisé en ce que** les images d'objets mémorisées le sont sur supports de données (13, 26).

4. Microscope suivant la revendication 3, **caractérisé en ce que** les supports de données (13) sont amovibles.

5. Microscope suivant au moins l'une des revendications 1 à 4, **caractérisé en ce que** le capteur d'image (24) enregistre uniquement le noir et blanc et que les images d'objets en couleur sont générables par l'ordinateur (25) à l'aide de filtres de séparation (21) et d'un mélange additif des trois couleurs fondamentales.

6. Microscope suivant au moins l'une des revendications 1 à 5 ou 2 à 5, **caractérisé en ce qu'**à l'arrière du boîtier du microscope (1a) ou du tube vidéo (6), est disposé un panneau de raccordement (17) destiné aux télécommunications.

7. Microscope suivant au moins l'une des revendications 1 à 6, **caractérisé en ce que** le microscope est équipé d'un microphone (14) destiné à la commande vocale et/ou à l'enregistrement de la voix ainsi que d'une caméra de conférence (16) et du haut-parleur associé (15).

8. Microscope suivant au moins l'une des revendications 1 à 7, **caractérisé en ce que** le microscope présente des entrées et/ou sorties optiques pour composants optiques externes classiques.

9. Microscope suivant au moins l'une des revendications 1 à 8, **caractérisé en ce que** le microscope se présente sous forme de microscope optique inverse et que l'écran observateur (8) est disposé dans la partie inférieure du boîtier.
